(19) Europäisches Patentamt
European Patent Office
Office européen des brevets

(11) Veröffentlichungsnummer: **0 113 015**
**B1**

(12) # EUROPÄISCHE PATENTSCHRIFT

(45) Veröffentlichungstag der Patentschrift: **14.01.87**

(51) Int. Cl.⁴: **C 08 L 67/06**, C 08 F 2/38

(21) Anmeldenummer: **83111603.3**

(22) Anmeldetag: **21.11.83**

(54) **Verwendung von 1,4-Dihydroxynapthalin bei der Polymerisation ethylenisch ungesättigter Verbindungen.**

(30) Priorität: **03.12.82 DE 3244814**

(43) Veröffentlichungstag der Anmeldung: **11.07.84 Patentblatt 84/28**

(45) Bekanntmachung des Hinweises auf die Patenterteilung: **14.01.87 Patentblatt 87/3**

(84) Benannte Vertragsstaaten: **DE FR GB IT**

(56) Entgegenhaltungen:
**US-A-3 555 117**
**US-A-3 914 200**

**CHEMICAL ABSTRACTS, Band 75, 1971, Zusammenfassung Nr. 110610v, Seite 16, Columbus Ohio (US)**

(73) Patentinhaber: **BAYER AG, Konzernverwaltung RP Patentabteilung, D-5090 Leverkusen 1 Bayerwerk (DE)**

(72) Erfinder: **Klöker, Werner, Prof. Dr., Deswatinesstrasse 26, D-4150 Krefeld 1 (DE)**
Erfinder: **Kraft, Klaus, Dr., Doerperhofstrasse 15, D-4150 Krefeld (DE)**

**EP 0 113 015 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft die Verwendung von 1.4-Dihydroxy-naphthalin für die Polymerisation ethylenisch ungesättigter Verbindungen, die mindestens einen Polymerisationskatalysator, eine Eisenverbindung und ggf. einen Aminbeschleuniger enthalten.

Ungesättigte Polyesterharze können u.a. als Bindemittel für Kitte, Mörtel, Dübelmassen, Spachtelmassen, Gießharze, Überzugsmittel und ggf. faserverstärkte Formkörper eingesetzt werden. Es ist bekannt, ungesättigte Polyesterharze in Gegenwart von Peroxid-Katalysatoren unter Verwendung von tertiären Arylaminen als Polymerisationsbeschleuniger bei Raumtemperatur ("kalt") zu härten (U8-P8 24 80 828). Vielfach werden für die "Kalthärtung" zu verwendende ungesättigte Polyesterharze bereits in "vorbeschleunigter" Form geliefert, d.h. sie enthalten bereits Beschleuniger und werden erst unmitteldar vor der Verarbeitung mit dem polymerisationskatalysator versetzt.

Derartige "kalthärtbare" Bindemittel sollen schwierig zu vereinende Eigenschaften besitzen, nämlich sowohl hohe bis höchste Reaktivität als auch gute Lagerstabilität.

Es ist bekannt, daß Eisenverbindungen, wie z.B. Eisenpentacarbonyl, Eisen(III)-chlorid und Ferrocen, peroxide aktivieren können und die Härtung sowohl Amin-freier als auch Amin-haltiger peroxid-katalysierter ungesättigter polyesterharze beschleunigen (DE-PS 959 589, US-PS 24 67 526, 24 67 527, GB-PS 596 190; Fette, Seifen, Anstrichmittel 59, 166 (1957); europäische Patentanmeldung 0 038 924; H. Hagen, Glasfaserverstärkte Kunststoffe, 2. Aufl., Springer Verlag, Berlin 1961, 8. 110/ 111).

Überraschenderweise haben wir gefunden, daß Eisenverbindungen in Kombination mit 1.4-Dihydroxynaphthalin und ggf. mit tertiären Arylaminen, vorzugsweise tertiären Monoarylaminen, ein Beschleuniger/Stabilisator-System ergeben, dessen Verwendung in Peroxid-katalysierten ethylenisch ungesättigten polymerisierbaren Verbindungen, vorzugsweise Acrylharzen und ungesättigten Polyesterharzen, zu einer unerwartet hohen beschleunigung der Härtung führt, so daß sehr kurze Gelierzeiten (in der Größenordnung von 15 sec bis 3 Minuten) ermöglicht werden, während dessen Verwendung in den gleichen, aber peroxidfreien Harzen trotzdem eine hohe Lagerstabilität bewirkt.

Gegenstand der Erfindung ist daher die Verwendung von

a) 0.02 bis 1, vorzugsweise 0.1 bis 0.5, Gew.-8 1.4-Dihydroxynsphthalin,

b) 0.0015 bis 0.15, vorsugsweise 0.003 bis 0.07, Gew.-% (berechnet als Metall) mindestens einer Eissnverbindung,

c) ggf. 0.05 bis 6, vorzugsweise 0.1 bis 4, Gew.-% mindestens eines tertiären Arylamins und

d) 0.25 bis 7, vdrzugsweise 1 bis 3, Gew.-8 mindestens eines Polymerisstionskatalysators

für die Polymerisation ethylenisch ungesättigter polymerisierbarer Verbindungen, wobei sich die Prozentangaben der Komponenten a), b), c) und d) auf die zu polymerisierenden Verbindungen beziehen.

Bevorzugte Eisenverbindungen (b) sind solche, die in den zu polymerisierenden Verbindungen löslich sind und (ggf. bei erhöhter Temperatur) einmal gelöst - bei Raumtemperatur in Lösung bleiben. Beispiele für solche löslichen Eisenverbindungen sind

Eisensalze, vorzugsweise Eisen (III)-salze gesättigter und/oder ungesättigter Monocarbonsäuren mit 1-32, vorzugsweise 2-18, C-Atomen oder gesättigter und/oder ungesättigter Dicarbonsäuren mit 2-30 C-Atomen, wie z.B. Eisen(III)naphthenat, Eisen(III)octoat,

Eisensalze monofunktioneller Dicarbonsäurederivate, insbesondere der oben genannten Dicarbonsäuren, wie z.B.

Eisensalze von Dicarbonsäurehalbestern, -halbamiden, -halbnitrilen,

Eisenverbindungen von Ketosäuren, Ketoestern, Di- und Oligo-Ketonen, insbesondere enolisierbaren, wie z.B Eisenacetylacetonat,

Charge-Transfer-Komplexe mit Eisen als Zentralatom, wie z.B. Ferrocen, und

Carbonyle mit Eisen als Zentralatom, wie z.B. Eisenpentacarbonyl.

Bevorzugte tertiäre Arylamine (c) umfassen N.N-Bis-($C_1$-$C_6$-alkyl)-arylamine, N.N-Bis-(β-hydroxy-$C_2$-$C_3$-alkyl)-arylamine (DE-PS 919 531), aus N.N-Bis-(βhydroxy- $C_2$-$C_3$-alkyl)-arylaminen, einem Diisocyanat und einer monofunktionellen Verbindung (Monoisocyanat, Monoalkohol, Monothioalkohol, primäres oder sekundäres Amin) erhältliche N-Aryl-substituierte Dialkanolaminpolyurethane (DE-PS 16 43 972), aus N.N-Bis-(β-hydroxy-$C_1$-$C_6$-alkyl)-arylaminen und Dicarbonsäuren erhältliche Polyesteramine (DE-PS 19 43 954); "Aryl" bedeutet in diesem Zusammenhang Phenyl, das durch 1 bis 3 $C_1$-$C_6$-Alkylgruppen substituiert sein kann.

Eine besondere Klasse tertiärer Arylamine c) sind

Verbindungen der Formel

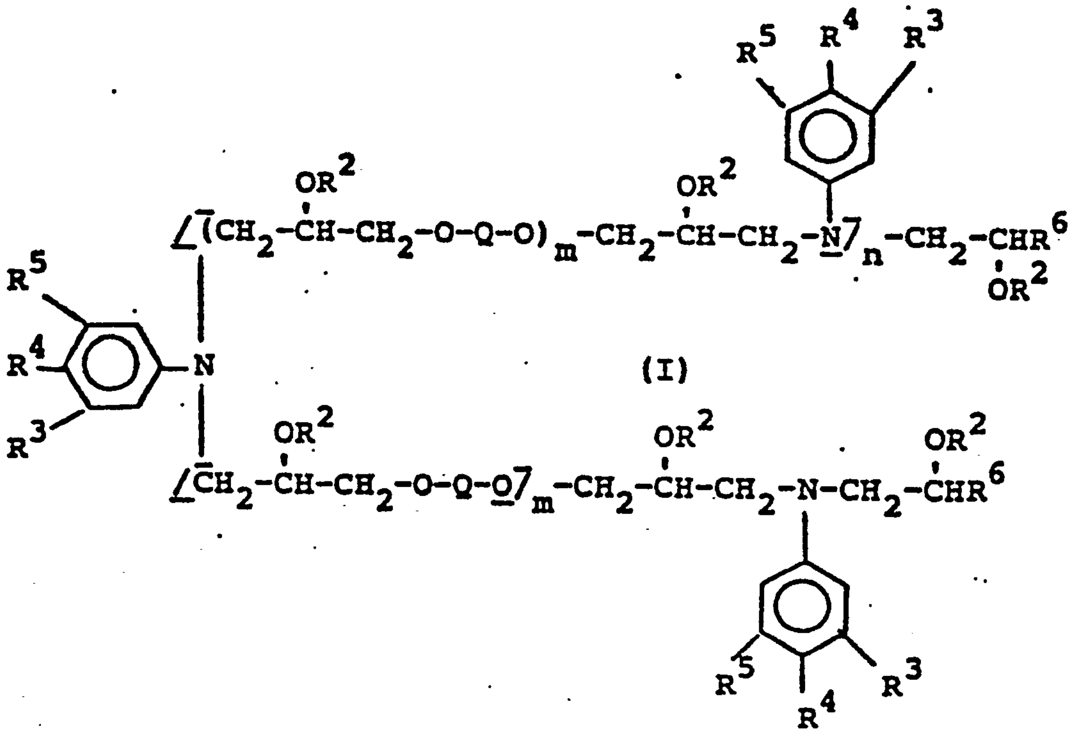

(I)

worin

Q 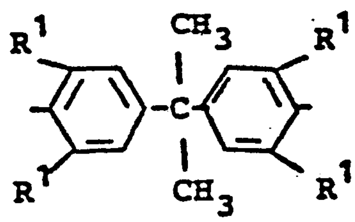 oder

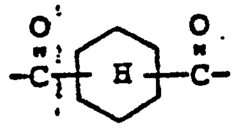 ,

$R^1$ Wasserstoff oder Methyl,

$R^2$ N-$C_1$-$C_{18}$-Alkylcarbamoyl, N-$C_6$-$C_{12}$-arylcarbamoyl, den um die Hydroxylgruppe verminderten Rest einer gegebenenfalls durch Chlor oder $C_1$-$C_4$-Alkyl substituierten aliphatischen gesättigten oder ein- bis dreifach ungesättigten, einer cycloaliphatischen, araliphatischen, heterocyclischen oder aromatischen Carbonsäure mit bis zu 21 C-Atomen oder Wasserstoff,

$R^3$ bis $R^5$ Wasserstoff, $C_1$-$C_{18}$-Alkyl, $C_5$-$C_8$-Cycloalkyl, $C_5$-$C_{14}$-Aryl, Fluor, Chlor, Brom, Jod,

$R^6$ Wasserstoff, Methyl, $C_6$-$C_{12}$-Aryl, Hydroxymethyl, Chlormethyl, $C_1$-$C_6$-Alkoxymethyl, $C_6$-$C_{12}$-Aryloxymethyl, $C_2$-$C_6$-Acyloxymethyl,

m eine Zahl von 1 bis 3,

n Null oder eine Zahl von 1 bis 3,

m + n eine Zahl von 1 bis 5

bedeuten, mit der Maßgabe, daß mindestens einer der Reste $R^3$, $R^4$, $R^5$ ein Alkylrest sein muß, sofern ein anderer (der Reste $R^3$, $R^4$, $R^5$) ein Halogenrest ist.

Derartige tertiäre Arylamine c) lassen sich z.B. dadurch herstellen, daß man in erster Stufe ein Anilin der Formel

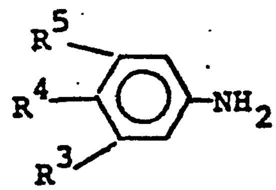

(II)

mit einem Diepoxid der Formel

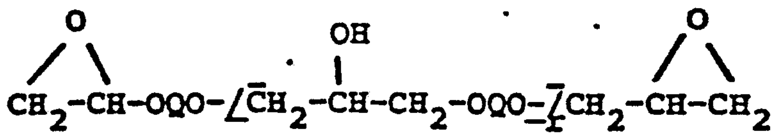

(III)

wobei r = m-1 gilt,

in solchen Mengen, daß das molare Verhältnis II/III 1.25 bis 2 beträgt, bei Temperaturen von 100 bis 250°C umsetzt, das erhaltene Reaktionsprodukt bei Temperaturen von 90 bis 180°C mit einem Oxiran der Formel

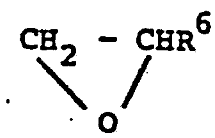

(IV)

oder bei Temperaturen von 160 bis 250°C mit einem Alkylencarbonat der Formel

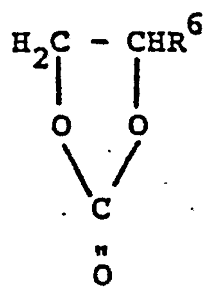

(V)

in solchen Mengenverhältnissen reagieren läßt, daß nach beendeter Reaktion mindestens 90 % aller Amin-Stickstoffatome tertiär gebunden sind, und gegebenenfalls anschließend die freien Hydroxylgruppen des so erhaltenen Produkts (R = H) mit einem Isocyanat der Formel

$R^2NCO$ (VI)

bei Temperaturen von 20 bis 120°C oder mit einer Monocarbonsäure der Formel

$R^2COOH$ (VII)

oder ihrem veresterungsfähigen Derivat bei Temperaturen von 150 bis 250°C ganz oder teilweise urethanisiert bzw. verestert.

Bevorzugte Polymerisationskatalysatoren d) sind Diacylperoxide, wie z.B. Diacetylperoxid, Dibenzoylperoxid, Di-p-chlorbenzoylperoxid, Phthaloylperoxid, Succinylperoxid, Dilauroylperoxid, Acetylcyclohexansulfonylperoxid und Percarbonate, wie z.B. Cyclohexylpercarbonat und Bis-(4-tert.-butylcyclohexyl)-percarbonat.

Bevorzugte zu polymerisierende ethylenisch ungesättigte Verbindungen sind Acrylharze und ungesättigte Polyesterharze.

"Acrylharze" im Sinne der Erfindung sind (Meth-)Acryloyloxygruppen enthaltende Polyester, Polyurethane, Polyepoxide, Polyole, Polyethsrpolyole, wie sie beispielsweise in den DE-OS 20 53 653, 22 61 612, 24 23 354, 25 35 691 (Polyester(meth)acrylate), in den DE-OS 14 47 929, 19 16 499, 21 15 373, in den US-PS 29 59 704, 32 97 745, in der GB-PS 743 514 (Urethan(meth)acrylate), in den DE-OS 19 21 959, 23 49 979, 24 11 760, 24 29 527, in der GB-PS 10 06 557, in den US-PS 30 66 112, 39 04 735 (Epoxy(meth)acrylate), in der DE-OS 17 70 825, in den US PS 21 01 107, 24 13 973, 33 68 900, 35 52 986, 35 58 387 (Polyol(meth)acrylate), in den DE-OS 26 51 507, 25 53 921 und in

den DS-PS 29 51 759, 33 80 531 (Polyetherpolyol(meth)acrylate) beschrieben sind.

Die vorgenannten "Acrylharze" können zur Viskositätserniedrigung, Reaktivitätserhöhung oder zur Erzielung spezieller Eigenschaften auch mit copolymerisierbaren olefinisch ungesättigten Monomeren, z.B. mit (Meth-) Acrylsäureestern einwertiger Alkohole, Hydroxyalkyl(meth)acrylaten, (Meth-)Acrylamiden, Styrol, α-Methylstyrol, durch Alkylgruppen kernsubstituierte Styrole, Divinylbenzol, (Meth-)Acrylnitril, Vinylchlorid, Vinylidenchlorid, Vinylethern, Vinylacetat oder deren Mischungen abgemischt werden. Natürlich ist es auch möglich, mindestens ein α,β-monoolefinisch ungesättigtes Monomeres, beispielsweise der vorstehend angegebenen Art, in Gegenwart der erfindungsgemäßen Stabilisator/Beschleuniger-Systeme zu polymerisieren.

"Ungesättigte Polyesterharze" im Sinne der Erfindung sind Mischungen von 20 bis 80 Gewichtsteilen α, β-ethylenisch ungesättigter Polyester und 80 bis 20 Gewichtsteilen damit copolymerisierbarer ungesättigter Monomerer.

Derartige α, β-ethylenisch ungesättigte Polyester sind die üblichen Polykondensationsprodukte mindestens einer α, β-ethylenisch ungesättigten Dicarbonsäure mit in der Regel 4 oder 5 C-Atomen oder deren esterbildenden Derivate, gegebenenfalls in Abmischung mit bis zu 400 Mol-%, bezogen auf die ungesättigten Säurekomponenten, mindestens einer aliphatischen gesättigten Dicarbonsäure mit 4 - 10 C-Atomen oder einer cycloaliphatischen, araliphatischen oder aromatischen Dicarbonsäure mit 8 - 10 C-Atomen oder deren esterbildenden Derivate mit mindestens einer Polyhydroxyverbindung, insbesondere Dihydroxyverbindung, mit 2 - 8 C-Atomen - also Polyester, wie sie z.B. bei J.R. Lawrence, "Polyester Resins", Reinhold publ. Corp., New York 1960, S. 18 f., und im Kunststoff-Handbuch, Bd. VIII ("Polyester"), Carl Hanser Verlag, München 1973, S. 247 - 312, beschrieben sind.

Die Säurezahlen der Polyester sollen zwischen 1 und 100, vorzugsweise zwischen 10 und 50, die OH-Zahlen zwischen 10 und 150, vorzugsweise zwischen 20 und 100, und die als Zahlenmittel gemessenen Molekulargewichte $\bar{M}_n$ zwischen ca. 300 und 10000, vorzugsweise zwischen ca. 1000 und 3000 liegen (dampfdruckosmometrisch gemessen in Dioxan und Aceton; bei differierenden Werten wird der niedrigere als der korrekte angesehen).

Das bevorzugteste copolymerisierbare Monomere ist Styrol.

Andere bevorzugte copolymerisierbare Monomere sind oben unter der Definition der "Acrylharze" zu finden.

Eine "Grundstabilisierung" der zu polymerisierenden ethylenisch ungesättigten Verbindungen kann z.B. mit ggf. kernalkylierten Diphenolen, deren Ethern, Benzochinon und dessen kernalkylierten und -halogenierten Derivaten, wie Tetrachlorbenzochinon, Di-tert.butylchinon, tert.-Butylhydrochinon, Trimethylhydrochinon, Hydrochinon, Sulfinyldiphenol, und/oder Kupferverbindungen, wie Kupfernaphthenat, Kupferoctoat, Kupfer(I)komplexe neutraler Phosphorigsäureester, in Mengen von 0.0005 bis 0.2, vorzugsweise 0.001 bis 0.05, Gew.-%, bezogen auf zu polymerisierende ethylenisch ungesättigte Verbindung, erfolgen.

Auch 1.2- und 2.8-Dihydroxynaphthalin können als Stabilisatoren mitverwendet werden. Bei Verwendung einer bestimmten Konzentration von 2.6-Dihydroxynaphthalin tritt nach Zugabe des Peroxids eine grüne Färbung auf (Indikator für Peroxide), die ggf. während der Härtung wieder verschwinden kann.

Die zu polymerisierenden Verbindungen können selbstverständlich Füll-, Verstärkungs- und/oder Flammschutzmittel enthalten.

Die mit den erfindungsgemäß zu verwendenden Stabilisator/Beschleuniger-Systemen versehenen polymerisierbaren Verbindungen lassen sich in der Bau- und in der Elektroindustrie, im Boots- und Schiffbau sowie in der Kraftfahrzeugindustrie einsetzen. Höchstreaktive Systeme sind für die Fixierung von Werkstücken und Bauteilen bei der Montage von Bedeutung.

Die Prozentangaben der nachfolgenden Beispiele beziehen sich auf das Gewicht; Teile sind Gewichtsteile.

**Beispiele**

**Herstellung bzw. Konstitution der Komponenten**

**Ungesättigtes Polyesterharz I (UP I)**

Maleinsäureanhydrid, Phthalsäureanhydrid, Propandiol-1.2 und Diethylenglykol im Molverhältnis 0.8;0.2:0.532: 0.668 wurden in der Schmelze polykondensiert, bis eine Säurezahl von 7.6 erreicht war. 100 Teile des so erhaltenen Polyesters wurden mit 0.01 Teil Hydrochinon stabilisiert und mit Styrol bis zu einem Festgehalt von 63.1 % verdünnt. Die Viskosität des so erhaltenen Harzes UP I betrug 669 mPa.s bei 20°C.

**Ungesättigtes Polyesterharz II (Up II)**

Die für die Herstellung von UP I verwendeten Dicarbonsäureanhydride und Diole wurden im gleichen Molverhältnis bis zu einer Säurezahl von 6 polykondensiert. 100 Teile des so erhaltenen Polyesters wurden mit 0.01 Teil Hydrochinon und mit 0.002 Teilen Kupfernaphthenat stabilisiert und mit Styrol auf einen Festgehalt von 66.9 % verdünnt. Viskosität: 1180 mPa.s (20°C).

**Ungesättigtes Polyesterharz III (UP III)**

94 Teile Up II wurden mit 6 Teilen Styrol verdünnt und mit 4 Teilen Arylamin C (s. unten) vorbeschleunigt.

**Epoxyacrylat**

Ein Epoxyacrylat, hergestellt aus 80.95 Teilen Bisphenol-A-Diepoxid (Epoxidäguivalent 190) und 23.81 Teilen Acrylsäure in Gegenwart von 0.42 Teilen Thiodiglykol als Katalysator, wurde mit 15 Teilen Triethoxytrimethylolpropantrisacrylat gemischt und mit 0.42 Teilen p-Methoxyphenol stabilisiert. Viskosität: ca. 170 000 mpa.s (20° C).

**Arylamin A**

10%-ige Lösung von N.N-Dimethyl-p-toluidin in Styrol.

**Arylamin B**

N.N-Bis-(β-hydroxyethyl)-p-toluidin

**Arylamin C**

Poly-[N.N-bis(β-hydroxypropyl)-p-toluidin-adipat], 70%-ig in Styrol gelöst, Viskosität entsprechend einer Auslaufzeit von 110 sec (DIN 53 211, DIN-Becher 4).

**Arylamin D**

70%-ige Lösung des durch Umsetzung von 1 Mol Bisphenol-A-diglycidether mit 2 Mol (3,4-)Xylidin und anschließende Anlagerung von 2 Mol Ethylenoxid erhaltenen Reaktionsprodukts in Styrol.

1.4-, 1.2- und 2.6-Dihydroxynaphthalin (DHN) wurden jeweils in einer Mischung aus Styrol und Ethylenglykolmonoethylether (1:1 Gewichtsteile) gelöst; die Konzentration ist bei den einzelnen Beispielen angegeben.

Kupfernaphthenat wurde in Form einer 1%-igen Lösung (0,1% Cu-Metallgehalt) in Styrol eingesetzt.

Eisenoctoat wurde als 56%-ige Lösung in Testbenzin (Eisengehalt 7-8 %) verwendet.

Benzoylperoxid wurde als handelsübliche Paste (Weichmacheranteil 50%) eingesetzt.

Sulfinyldiphenol wurde in Form seiner Lösung in Styrol/ Ethylenglykolmonoethylether (1:1 Gewichtsteile) eingesetzt.

**Meßmethoden**

Die Härtungen erfolgten bei Raumtemperatur (25° C).

Die Gelierzeiten wurden nach zwei verschiedenen Methoden gemessen:

a) durch Eintauchen mit einem Glasstab; sobald das Harz beim Herausnehmen des Glasstabes Fäden zieht, ist die Gelierzeit ("per Hand") erreicht.

b) in Anlehnung an DIN 16 946, Blatt 1, Kap. 6.2.2 (Zeit bis zum Erreichen einer Temperatur von 35° C).

Als Härtezeiten gelten die Zeiten bis zun Erreichen der Maximaltemperatur; ebenfalls analog DIN 16 946, Blatt 1, Kap. 6.2.2.

Die Temperatur wurde mit einem Eisen/Jonstantan-Thermoelement oder mittels Widerstandsthermometer bestimmt.

Die Bestimmung der Lagerfähigkeit erfolgte im Wärmeschrank in 50 ml-Glasflaschen (selbatveratändlich ohne Benzoylperoxid).

**Tabelle 1**

Formulierung: 100 Teile UP I,
1%-ige Lösung von 1.4-Dihydroxynahthalin (1.4-DHN),
0.2 Teile Kupfernaphthenatlösung,
0.1 Teil Eisenoctoatlösung,
Arylamin C und
2 Teile Benzoylperoxidpaste.

| Beispiele | 1.1 | 1.2 | 1.3 | 1.4 | 1.5 |
|---|---|---|---|---|---|
| Teile 1.4-DHN-Lösung | - | 1 | 1.6 | 3 | 4 |
| Teile Arylamin C | 4 | - | 4 | 4 | 4 |
| Gelierzeit per Hand (sec) | | | ~ 24 | ~ 24 | ~ 24 |
| Gelierzeit nach DIN (Min) | 1.3 | 0.65 | | | |
| Härtezeit (Min.) | 2.6 | 3.3 | nicht gemessen | | |
| Maximaltemperatur (°C) | 147 | 55 | | | |
| Lagerfähigkeit | | | | | |
| bei 80 °C (Stunden) | 1.5 | 39 | 10 | 15 | 16 |
| bei 50°C (Tage) | 4 | 50 | 14 | 22 | 34 |

**Tabelle 2**

Formulierung: 94 Teile UP II,
6 Teile Styrol,
10%-ige Lösung von 1.4-DHN,
0.1 Teil Eisenoctoatlösung,
Benzoylperoxidpaste,
kein Arylamin

| Beispiele | 2.1 | 2.2 |
|---|---|---|
| Teile 1.4-DHN-Lösung | 1.6 | 1.6 |
| Teile Benzoylperoxidpaste | - | 2 |
| Gelierzeit per Hand (sec.) | | 15 - 18 |
| Gelierzeit nach DIN (Min.) | | 0.9 |
| Härtezeit (Min.) | | 3,4 |
| Maximaltemperatur (°C) | | 53 |

**Tabelle 3**

Formulierung: 100 Teile UP II,
10%-ige Lösung von 1.4-DHN,
0.1 Teil Eisenoctoatlösung,
Arylamin A, B bzw. D und
2 Teile Benzoylperoxidpaste.

| Beispiele | 3.1 | 3.2 | 3.3 |
|---|---|---|---|
| Teile 1.4-DHN-Lösung | 1.6 | 1.6 | 1.6 |
| Teile/Art Arylamin *) | 2.703 A | 0.4 B | 1.124 D |
| Gelierzeit per Hand (sec.) | 18 | 18 | 17 |
| Gelierzeit nach DIN (Min.) | 1.1 | 1.1 | 1.15 |
| Härtezeit (Min.) | 4.3 | 4.3 | 4.0 |
| Maximaltemperatur (°C) | 125 | 136 | 134 |

* Die unterschiedlichen Mengen entsprechen gleichem Gehalt an Amin-Stickstoff.

**Tabelle 4**

Formulierung: 100 Teile UP III,
10%-ige Lösung von 1.4-DHN,
Eisenoctoatlösung
10%-ige Lösung von Eisenacetylacetonat in Styrol und
2 Teile Benzylperoxidpaste

| Beispiele | 4.1 | 4.2 |
|---|---|---|
| Teile 1.4-DHN-Lösung | 1.6 | 1.6 |
| Teile Eisenoctoatlösung | 0.1 | - |
| Teile Eisenacetylacetonatlösung | - | 0.5 |
| Gelierzeit per Hand (sec.) | 18 | 16 |
| Gelierzeit nach DIN (Min.) | 1.0 | 0.9 |
| Härtezeit (Min.) | 4.2 | 4.2 |
| Maximaltemperatur (°C) | 116 | 115 |
| Lagerfähigkeit | | |
| bei 80°C (Stunden) | 94 | 94 |
| bei 50°C (Tage) | 90 | 90 |

**Tabelle 5**

Formulierung: 100 Teile Up I,
10%-ige Lösung von 1.4-DHN,
Eisenoctoatlösung,
0.2 Teile Kupfernaphthenatlösung,
4 Teile Arylamin C,

Tetrachlorbenzochinon, 1 %ige Lösung in Styrol,
1%-ige Lösung von Hydrochinon in Styrol/ Ethylenglykolmonoethylether (1:1) Gewichtsteile,
1%-ige Lösung von Sulfinyldiphenol und
2 Teile Benzoylperoxidpaste

| Beispiele | 5.1 | 5.2 | 5.3 | 5.4 | 5.5 | 5.6 |
|---|---|---|---|---|---|---|
| Teile 1.4-DHN-Lösung | 0.3 | 0.4 | 1 | 1 | 1.5 | 2 |
| Teile Eisenoctoatlösung | 0.1 | 0.1 | 0.1 | 0.1 | 0.05 | 0.05 |
| Teile Tetrachlorbenzochinon | - | 3 | - | 3 | 3 | 3 |
| Teile Hydrochinonlösung | - | - | - | - | - | 1 |
| Teile Sulfinyldiphenol-Lösung | - | - | 2.34 | - | - | - |
| Gelierzeit per Hand (sec) | 24 | 60 | 22 | 31 | 45 | 67 |
| Gelierzeit nach DIN (Min.) | nicht | 3.6 | 0.7 | 2.8 | 3.5 | 6.2 |
| Härtezeit (Min.) | gemessen | 5.1 | 3.4 | 5.4 | 6.5 | 10.7 |
| Maximaltemperatur (°C) | | 144 | 136 | 138 | 132 | 118 |
| Lagerfähigkeit | | | | | | |
| bei 80°C (Stunden) | 15 | 72 | 77-140 | 88 | 72-136 | 72-136 |
| bei 50°C (Tage) | 22 | 105 | 118-135 | 115 | 128 | 139 |

Tabelle 6
Formulierung: 100 Teile UP II,
6 Teile Styrol,
1 Teil 10%-ige 1.4-DHN-Lösung,
10%-ige Lösung von 1.2-bzw. 2.6-DHN,
4 Teile Arylamin C,
0.1 Teil Eisenocotoatlösung,
1 %-ige Sulfinyldiphenol-Lösung und
2 Teile Benzoylperoxidpaste

| Beispiele | 6.1 | 6.2 | 6.3 | 6.4 | 6.5 | 6.6 | 6.7 | 6.8 |
|---|---|---|---|---|---|---|---|---|
| Teile 1.2-DHN-Lösung | - | 0.3 | 0.8 | 1.6 | - | - | - | - |
| Teile 2.6-DHN-Lösung | - | - | - | - | 0.3 | 0.8 | 1.6 | - |
| Teile Sulfinyldiphenol-Lösung | - | - | - | - | - | - | - | 3 |
| Gelierzeit per Hand (sec) | 12 | 15 | 17 | 19 | 17 | 14 | 15 | 17 |
| Gelierzeit nach DIN (Min.) | 0.9 | 1.3 | 6.0 | 35.6 | 0.9 | 0.85 | 0.9 | 1.65 |
| Härtezeit (Min.) | 3.6 | 5.6 | 9.8 | 45.3 | 6.8 | 11.9 | 2.2 | 4.45 |
| Maximaltemperatur (°C) | 129 | 124 | 116 | 69 | 125 | 106 | 38 | 125 |
| Färbung | - | - | - | - | - | * | grün | - |

* wird grün nach Benzoylperoxid-Zugabe; Färbung ändert sich bzw. verschwindet während der Härtung.

**Tabelle 7**

Formulierung: 100 Teile Epoxyacrylat,
10 %-ige Lösung von 1.4-DHN,
0.1 Teil Eisenoctoatlösung,
4 Teile Arylamin C und
2 Teil Benznylperoxidpaste

| Beispiele | 7.1 | 7.2 |
|---|---|---|
| Teile 1.4-DHN-Lösung | - | 1.6 |
| Gelierzeit per Hand (Min.) | 8 | 1 |
| Gelierzeit nach DIN (Min.) | 14.2 | nicht |
| Härtezeit (Min.) | 22 | gemessen |
| Maximaltemperatur (°C) | 48 | |
| Lagerfähigkeit | | |
| bei 80°C (Stunden) | 40 | ca. 400 |
| bei 50°C (Tage) | > 100 | > 100 |

**Patentansprüche**

1. Verwendung von
a) 0.02 bis 1 Gew.-% 1.4-Dihydroxynaphthalin,
b) 0.0015 bis 0.15 Gew.-% (berechnet als Metall) mindestens einer Eisenverbindung,
c) ggf.0.05 bis 8 Gew.-% mindestens eines tertiären Arylamins und
d) 0.25 bis 7 Gew.-% mindestens eines Polymerisationskatalysators
für die Polymerisation ethylenisch ungesättigter polymerisierbarer Verbindungen, wobei sich die Prozentangaben der Komponenten a), b), c) und d) auf die zu polymerisierenden Verbindungen beziehen.

2. Verwendung nach Anspruch 1, dadurch gekennzeichnet, daß die üenge der Komponente a) 0.1 bis 0.5 Gew.-% beträgt.

3. Verwendung nach Ansprüchen 1 und 2, dadurch gekennzeichnet, daß die Menge der Komponente b) 0.003 bis 0.07 Gew.-% beträgt.

4. Verwendung nach Ansprüchen 1 - 3, dadurch gekennzeichnet, daß die Menge der Komponente c) 0.1 bis 4 Gew.- % beträgt.

5. Verwendung nach Ansprüchen 1 - 4, dadurch gekennzeichnet, daß die Menge der Komponente d) 1 bis 3 Gew.-% beträgt.

6. Verwendung nach Ansprüchen 1 - 5, dadurch gekennzeichnet, daß die ethylenisch ungesättigten polymerisierbaren Verbindungen ungesättigte Polyesterharze und/oder Acrylharze sind.

7. Verwendung nach Ansprüchen 1 - 6, dadurch gekennzeichnet, daß die Komponente b) Eisen(III)-naphthenat und/oder Eisen(III)-octoat und/oder Eisen(III)acetylacetonat ist.

8. Verwendung nach Ansprüchen 1-7, dadurch gekennzeichnet, daß man zusätzlich 0,0005 bis 0,2 Gew.-%, bezogen auf die zu polymerisierenden Verbindungen, Sulfinyldiphenol als Stabilisator oder Costabilisator einsetzt.

**Claims**

1. Use of
a) 0.02 to 1% by weight of 1 4-dihydroxynaphthalene,
b) 0.0015 to 0 15% by weight (calculated as metal) of at least one iron compound,
c) optionally 0.05 to 6% by weight of at least one tertiary arylamine and
d) 0.25 to 7% by weight of at least one polymerisation catalyst for the polymerisation of ethylenically unsaturated polymerisable compounds, the percentages of components a), b), c) and d) being based on the compounds to be polymerised.
2. Use according to Claim 1, characterised in that the quantity of component a) is 0.1 to 0.5% by weight.
3. Use according to Claims 1 and 2, characterised in that the quantity of component b) is 0.003 to 0.07% by weight.
4. Use according to Claims 1 - 3, characterised in that the quantity of component c) is 0.1 to 4% by weight.
5. Use according to Claims 1 - 4, characterised in that the quantity of component d) is 1 to 3% by weight.
6. Use according to Claims 1 - 5, characterised in that the ethylenically unsaturated polymerisable compounds are unsaturated polyester reains and/or acrylic resins.
7. Use according to Claims 1 - 6, characterised in that component b) is iron(III) naphthenate and/or iron(III) octoatp and/or iron(III) acetylacetonate.
8. Use according to Claims 1-7, characterised in that 0.0005 to 0.2% by weight, based on the compounds to be polymerised, of sulphinyl diphenol is additionally used as a stabiliser or co-stabiliser.

**Revendications**

1. Utilisation de
a) 0,02 à 1 % en poids de 1,4-dihydroxy-naphthalène,
b) 0,0015 à 0,15 % en poids (exprimé en métal) d'au moins un composé de fer,
c) éventuellement 0,05 à 6 % en poids d'au moins une arylamine tertiaire et
d) 0,25 à 7 % en poids d'au moins un catalyseur de polymérisation
pour la polymérisation de composés polymérisables à insaturation éthylénique, les indications de pourcentages des composants a), b), c) et d) se rapportant aux composés à polymériser.
2. Utilisation suivant la revendication 1, caractérisée en ce que la quantité du composant a) s'élève à 0,1-0,5 % en poids.
3. Utilisation suivant les revendications 1 et 2, caractérisée en ce que la quantité du composant b) s'élève à 0,003-0,07 % en poids.
4. Utlisation suivant les revendications 1 à 3, caractérisée en ce que la quantité du composant c) s'élève à 0,1-4 % en poids.
5. Utilisation suivant les revendications 1 à 4, caractérisée en ce que la quantité du composant d) s'élève à 1-3 % en poids.
6. Utilisation suivant les revendications 1 à 5, caractérisée en ce que les composés polymérisables à insaturation éthylénique sont des résines de polyesters insaturés et/ou des résines acryliques.
7. Utilisation suivant les revendications 1 à 6, caractérisée en ce que le composant b) est le naphténate de fer (III) et/ou l'octoate de fer (III) et/ou l'acétylacétonate de fer (III).
9. Utilisation suivant les revendications 1 à 7, caractérisée en ce qu'on utilise en outre 0,0005 à 0,2 % en poids, par rapport aux composés à polymériser, de sulfinyldiphénol comme agent stabilisant ou costabilisant.